# EUROPEAN PATENT SPECIFICATION

(11) **EP 3 329 116 B1**
(45) Date of publication and mention of the grant of the patent: **12.06.2019**
(21) Application number: 16750487.7
(22) Date of filing: 29.07.2016
(51) Int. Cl.: F03B 17/06, F03B 13/26

(54) **WATER TURBINE ARRANGEMENTS**
WASSERTURBINENANORDNUNGEN
AGENCEMENTS DE TURBINE HYDRAULIQUE

(30) Priority: 30.07.2015 GB 201513387
(43) Date of publication of application: 06.06.2018
(73) Proprietor: Nova Innovation Ltd., Edinburgh Lothian EH6 6QH (GB)
(72) Inventor: CONNOR, Gary, Edinburgh Lothian EH6 6QH (GB); MCCOMBES, Tom, Edinburgh Lothian EH6 6QH (GB)
(74) Representative: Peter, Kenneth William
(86) International application number: PCT/GB2016/052351
(87) International publication number: WO 2017/017475

(56) References cited:
- DE-U1-202009 002 268
- GB-A- 2 462 880
- JP-A- 2003 307 172
- US-A- 4 313 711

## Description

### Field of the Invention

The present invention relates to a water turbine arrangement for extracting energy from a flow of water. The present invention also relates to a power generating arrangement comprising such a water turbine arrangement.

### Background Art

In recent years power harvested from tidal and river current flows has become a significant source of sustainable energy. There has been much development of late of generating apparatus which is operative to harvest power from tidal and river current flows. Such generating apparatus is typically configured to convert the kinetic energy in a tidal or river flow to electricity by way of a turbine which drives an electrical generator to provide electrical energy. Generating apparatus which is configured to convert the kinetic energy to a form of energy other than electrical energy, for example hydraulic energy, is not unknown. Known generating apparatus must often be located where there is a fast flow of water. Fast flowing water is invariably accompanied by large fluctuations in the speed of water flow and is often accompanied by variation in the direction of the water flow. Devising generating apparatus which is capable of harvesting energy from tidal and river current flows in an efficient fashion therefore presents a challenge.

The patent publication US 4313711 shows an example of a turbine arrangement for harvesting flow energy from waves.

The present inventors have recognised that water flow changes direction throughout the tidal cycle. Also flow (or flood) and ebb tides are generally bidirectional at most sites. Furthermore the flow direction in estuaries and rivers can change significantly over the tidal cycle and depending on weather conditions. It is therefore an object for the present invention to provide a water turbine arrangement for extracting energy from a flow of water which is configured to provide for efficiency of generation of power from the movement of water and in particular where the movement of water is subject to change of direction such as is encountered over the full tidal range. It is a further object for the present invention to provide a power generating arrangement comprising such a water turbine arrangement for extracting energy from a flow of water.

### Statement of Invention

According to a first aspect of the present invention there is provided a water turbine arrangement for extracting energy from a flow of water, the water turbine arrangement comprising:
a turbine;
at least one blade mounted for rotation and mechanically coupled to the turbine, the at least one blade, in use, rotating in dependence on flow of water to thereby rotate the turbine, each at least one blade being mounted such that the blade pitch is unchangeable,
the water turbine arrangement being configured such that: the at least one blade and the turbine rotate in a same direction irrespective of whether the flow of water is in a first direction or in a second, opposite direction; and the at least one blade is unencircled by part of the water turbine arrangement radially of a distal end of the at least one blade.

The water turbine arrangement according to the invention comprises a turbine and at least one blade mounted for rotation and mechanically coupled to the turbine. The at least one blade, in use, rotates in dependence on flow of water to thereby rotate the turbine. Each at least one blade is mounted such that the blade pitch is unchangeable.

The water turbine arrangement is configured such that the at least one blade and the turbine rotate in a same direction irrespective of whether the flow of water is in a first direction or in a second, opposite direction. The water turbine arrangement extracts energy when the water flow is in one direction and the turbine rotates in, for example, a clockwise direction and also extracts energy when the water flow reverses such that it is in the opposite direction and the turbine rotates in the same clockwise direction. The water turbine arrangement may thus be capable of extracting energy from bidirectional flow of water in the like of estuaries and offshore tidal streams. A turbine which rotates in one direction only may provide for a simplification of drivetrain design and structural loading requirements. As a consequence performance may be improved, such as in respect of reduced thrust pulsing due to velocity shear and increased power due to the blade not being stalled, by positioning the turbine in a body of water so as to take advantage of yaw error in the water inflow to thereby decrease the inflow angle of attack on the retreating blade, for example by setting the yaw error to be substantially the same in both flow directions.

The water turbine arrangement is configured such that the at least one blade is unencircled by part of the water turbine arrangement radially of a distal end of the at least one blade. The water turbine arrangement is therefore shroudless. The water turbine arrangement may thus be capable of operating with a wider azimuthal range of water flow than a shrouded water turbine arrangement. A shroud may be a covering of typically cylindrical form which surrounds the turbine blades at least and perhaps also the turbine. A turbine may comprise a rotor. The turbine may further comprise at least one of: a drive train arrangement; a nacelle; and a support arrangement. The nacelle may be an enclosure and more specifically a streamlined enclosure which at least one of accommodates and supports components of the turbine. The drive train arrangement may comprise a rotor (or main shaft) and perhaps also a gear arrangement. Components of the turbine accommodated and perhaps also supported by the nacelle may comprise the drive train arrangement and perhaps also a generator. Components of the turbine supported by the nacelle may comprise the at least one blade. More specifically the at least one blade may be attached towards a distal end of the rotor extending from the nacelle. The support arrangement may be configured to support the water turbine arrangement, for example, on the sea or estuary bed.

The water turbine arrangement may be configured such that the at least one blade and the turbine rotate in a same direction irrespective of whether the flow of water is in a first direction towards a face of the at least one blade or a second, opposite direction. The water turbine arrangement may be configured such that the at least one blade and the turbine rotate in a same direction irrespective of whether the flow of water is in a first direction parallel to an axis of rotation of the turbine or a second, opposite direction.

Each at least one blade may be symmetric in cross-section (i.e. a section at right angles to the longitudinal axis of the blade) about a plane substantially orthogonal to an axis of rotation of the blade. The blade may be symmetric in cross-section about a plane which extends from a proximal end to a distal end of the blade. The blade may be symmetric in cross-section about a plane which extends from a leading edge of the blade to a trailing edge of the blade. The symmetric shape in cross section of the at least one blade may be such that substantially no lift is generated by the at least one blade when the at least one blade is parked, i.e. not turning despite there being a flow of water. The lack of lift and hence torque when parked may provide for greater ease of structural design and reduced operational oversight. Furthermore following loss of water flow, e.g. at the end of the tide, the at least one blade and the turbine slows to a stop without sustaining torque when the tide starts again which might otherwise lead in due course to structural failure.

Each at least one blade may be asymmetric in cross-section about a plane substantially parallel to an axis of rotation of the blade. The blade may be asymmetric in cross-section about a plane which extends from a proximal end to a distal end of the blade. The plane of symmetry and the plane of asymmetry may be substantially orthogonal to each other. A longitudinal axis of the blade may be defined by where the plane of symmetry and the plane of asymmetry cross. A blade which is symmetric about one plane only of two orthogonal planes has been found to provide superior performance over a bi-symmetric blade, i.e. a blade which is symmetric about both of two orthogonal planes, in respect of lift/drag ratio on account of increased drag caused by the bluff trailing edge, which becomes the leading edge for reversed water flow in a dual direction rotor.

A cross section through the blade may taper towards each of a leading edge and a trailing edge of the blade. The leading edge may be rounded and the trailing edge may be substantially sharp along at least a part of the length of the blade.

A longitudinal section (i.e. a section on which the longitudinal axis of the blade lies) through each at least one blade may be symmetric about a plane substantially orthogonal to an axis of rotation of the blade. Edges of the at least one blade and more specifically a leading edge and a trailing edge of the blade may each describe a substantially straight path when viewed along a plane substantially orthogonal to an axis of rotation of the blade. The blade may therefore not be twisted along its length. On the other hand, the width of a blade may change between proximal and distal ends whereby at least one of the leading and trailing edges of the blade describes a non-linear path when viewed in a direction parallel to an axis of rotation of the blade. A blade may increase in width from the proximal end before tapering in width towards a distal end. Alternatively or in addition a thickness of a blade may change between proximal and distal ends of the blade. A blade may be thickest towards the proximal end of the blade and may become progressively thinner towards the distal end of the blade.

The at least one blade may have a shape in accordance with a National Advisory Committee for Aeronautics (NACA) four-digit profile and more specifically a NACA 00xx profile. NACA 00xx profile is a symmetric profile. The cross sectional profile of the at least one blade may have a thickness ratio of between 10% and 15% and more specifically 12% at the distal end of the blade. The cross sectional profile of the at least one blade may have a thickness ratio of between 20% and 30% and more specifically 24% towards the proximal end of the blade and more specifically at a widest part of the blade before the blade tapers towards the proximal end. A blade according to the invention may be configured as described above to have substantially the same performance characteristics irrespective of the direction of water flow. As a result turbine performance may remain substantially consistent with change in flow direction despite the water turbine arrangement lacking a yaw or blade pitching arrangement.

The at least one blade may be mounted on the turbine. The turbine may comprise a rotor from which the at least one blade extends. The water turbine arrangement may comprise plural blades, such as three blades, spaced apart substantially equally in a circumferential direction around an axis of rotation of the turbine.

As mentioned above, the turbine may not rotate when parked, i.e. may not rotate despite there being a flow of water. The turbine may therefore not be self-starting such that a torque is required to start rotation. The water turbine arrangement therefore comprises a motor which is mechanically coupled to the turbine and which is operative to start rotation of the turbine. The motor may be an electric motor which, for example, receives electric power from the grid with which the water turbine arrangement is operative. Alternatively or in addition the generator may be operative as a motor to the same effect.

The water turbine arrangement is supported in a body of water. The water turbine arrangement may therefore be supported on the ground, for example on the seabed or an estuary bed, or suspended from the like of a gantry. Where the water turbine arrangement is ground supported the power generating apparatus may comprise a ground engaging arrangement which is configured to engage with the ground, such as a pillar which is embedded in the ground.

According to a second aspect of the present invention there is provided power generating apparatus comprising a water turbine arrangement according to the first aspect of the present invention.

The power generating apparatus may further comprise energy conversion apparatus which is operative to generate power in dependence on rotation of the turbine. The energy conversion apparatus may be mechanically coupled to the turbine.

The energy conversion apparatus may be configured to convert mechanical rotation to electrical energy. The energy conversion apparatus may therefore comprise an electrical generator. The energy conversion apparatus may further comprise a transformer which is operative to change at least one of a current level and a voltage level of electrical energy received from the electrical generator to another level. The transformer may therefore be operative to change at least one of the current level and the voltage level at the output from the electrical generator to a level appropriate for transmission from the power generating apparatus such as by way of a transmission cable to a remote electrical generation hub. In alternative forms of the invention the energy conversion apparatus may be configured to convert mechanical rotation to other forms of useful energy such as hydraulic energy. In one form the power generating apparatus may be of a direct drive configuration (i.e. without a gearbox). In another form the power generating apparatus may comprise a gear mechanism which is mechanically coupled between the at least one turbine arrangement and the energy conversion apparatus.

In contrast with known power generating apparatus, electrical apparatus which is operative to receive electrical power generated by energy conversion apparatus comprised in the present invention may have no need to be configurable to accommodate rotation of the at least one turbine arrangement in a first direction and in a second opposite direction, i.e. clockwise and anti- clockwise, at different times. Configurable electrical apparatus which receives electrical power generated by such known power generating apparatus may comprise a converter which is operative to convert the alternating current (AC) output signal to a grid AC signal by, for example, swapping first and third phases of a three phase supply with each other to thereby address the change in the order of the phases when the direction of rotation of the turbine changes.

Further embodiments of the second aspect of the present invention may comprise one or more features of the first aspect of the present invention.

According to a further aspect of the present invention there is provided a water turbine arrangement for extracting energy from a flow of water, the water turbine arrangement comprising: a turbine; and at least one blade mounted for rotation and mechanically coupled to the turbine, the at least one blade, in use, rotating in dependence on flow of water to thereby rotate the turbine. The water turbine arrangement may be configured such that the at least one blade and the turbine rotate in a same direction irrespective of whether the flow of water is in a first direction or a second, opposite direction. Alternatively or in addition the water turbine arrangement may be configured such that at least one blade is unencircled by part of the water turbine arrangement radially of a distal end of the at least one blade. Further or alternative embodiments of the further aspect of the present invention may comprise one or more features of the first aspect of the present invention.

### Brief Description of Drawings

Further features and advantages of the present invention will become apparent from the following specific description, which is given by way of example only and with reference to the accompanying drawings, in which:
Figure 1 is shows power generating apparatus comprising a water turbine arrangement according to the invention in situ;
Figure 2 is a face view of a blade comprised in the water turbine arrangement of Figure 1;
Figures 3A to 3E are views in cross section of the blade shown in Figure 2;
Figures 4A to 4D are larger views of the trailing edge of the blade shown in Figure 2 at locations corresponding to the views in cross section of Figures 3B to 3E;
Figure 5A is a longitudinal section through the blade shown in Figure 2; and
Figure 5B is a larger view of the distal end of the blade shown in longitudinal section in Figure 5A.

### Description of Embodiments

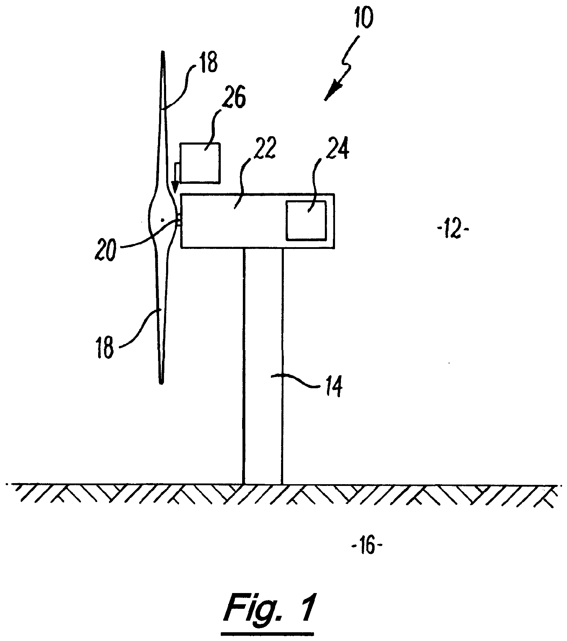

Power generating apparatus 10 comprising a water turbine arrangement according to the present invention is shown in situ in Figure 1. The power generating apparatus 10 is supported in a body of water 12 on top of a pillar 14 (which constitutes a support arrangement) which is embedded at its proximal end in the like of the seabed or an estuary bed 16. The power generating apparatus comprises a water turbine arrangement which in turn comprises three blades 18 mounted on a rotor 20 of a turbine 22 such that the three blades are spaced apart substantially equally in a circumferential direction around an axis of rotation of the turbine. Each of the three blades is mounted such that its pitch cannot change. The three blades are mounted towards an end of the rotor which extends from a nacelle, the rotor being comprised in a drive train arrangement. The part of the rotor extending from the nacelle is supported by the nacelle by way of a bearing and seal arrangement. The power generating apparatus 10 further comprises an electrical generator 24 which is operative to convert mechanical rotation of the turbine to electrical energy and an electric motor 26 which is operative to impart torque to the rotor 20 of a parked turbine 22 over sufficient time to start the turbine rotating. Although not shown in Figure 1, the power generating apparatus 10 also comprises a transformer which is operative to change at least one of a current level and a voltage level of electrical energy received from the electrical generator to a level appropriate for transmission from the power generating apparatus by way of a transmission cable to a remote electrical generation hub. The power generating apparatus 10 comprises a drive train arrangement which either is of a direct drive configuration (i.e. lacking a gearbox) or comprises a gear mechanism which is mechanically coupled between the water turbine arrangement and the electrical generator 24.

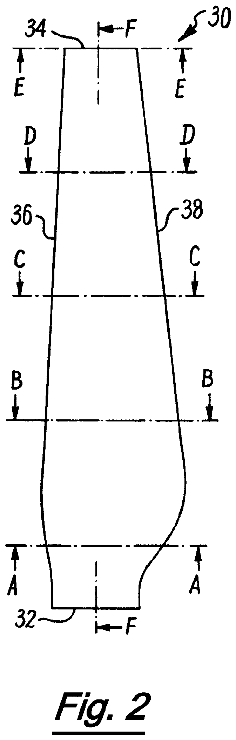

A face view of a blade 30 comprised in the water turbine arrangement of Figure 1 is shown in Figure 2. The axis of rotation of the blade and hence the turbine is orthogonal to the plane of the view of the blade in Figure 2. As can be seen from Figure 2 the blade increases in width from the proximal end 32 before tapering in width towards a distal end 34. The blade is 4.5 m long and 0.75 m wide at its proximal end.

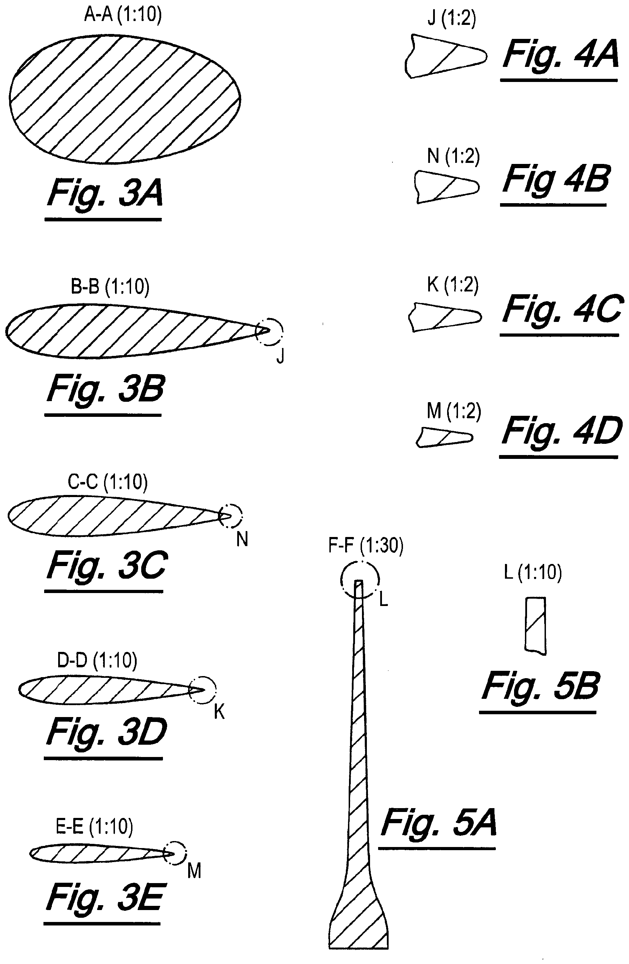

Views in cross section of the blade of Figure 2 are shown in Figures 3A to 3E. Figure 3A shows a cross section through the blade 0.5 m from the proximal end of the blade 32 as indicated by A-A in Figure 2. The width of the blade at A-A is 950 mm. Figure 3B shows a cross section through the blade 1.5 m from the proximal end of the blade as indicated by B-B in Figure 2. The width of the blade at B-B is 1000 mm. Figure 3C shows a cross section through the blade 2.5 m from the proximal end of the blade as indicated by C-C in Figure 2. The width of the blade at C-C is 900 mm. Figure 3D shows a cross section through the blade 3.5 m from the proximal end of the blade as indicated by D-D in Figure 2. The width of the blade at D-D is 750 mm. Figure 3E shows a cross section through the blade 4.5 m from the proximal end of the blade as indicated by E-E in Figure 2. The width of the blade at E-E is 600 mm. The blade has a shape in accordance with a NACA 00xx profile where xx is the maximum thickness of the blade as a percentage of the chord length of the blade. As can be seen from Figures 3A to 3E, the cross section profiles are symmetric about a plane substantially orthogonal to an axis of rotation of the blade. This plane extends from a proximal end 32 to a distal end 34 of the blade and from a leading edge 36 of the blade to a trailing edge 38 of the blade. Furthermore the cross section profiles are asymmetric about a plane substantially parallel to an axis of rotation of the blade which extends from the proximal end 32 to the distal end 34 of the blade. Each cross section profile tapers towards each of a leading edge 36 and a trailing edge 38 of the blade. The leading edge 36 is rounded and the trailing edge is substantially sharp. Larger views of the trailing edge of the blade shown in Figure 2 at locations corresponding to the views in cross section of Figures 3B to 3E are shown in Figures 4A to 4D.

A longitudinal section through the blade of Figure 2 is shown in Figure 5A. Figure 5B is a larger view of the distal end of the blade shown in longitudinal section in Figure 5A. As can be seen from Figure 5A the blade in longitudinal section is symmetric about a plane substantially orthogonal to an axis of rotation of the blade. The thickness of the blade changes between proximal and distal ends of the blade with the blade being thickest towards the proximal end and becoming progressively thinner towards the rounded distal end. Returning now to Figures 3A to 3E, the thickness of the blade is 570 mm at A-A, 240 mm at B-B, 162 mm at C-C, 112.5 mm at D-D and 72 mm at E-E. The leading edge 36 and the trailing edge 38 of the blade each describe a substantially straight path when viewed along a plane substantially orthogonal to an axis of rotation of the blade whereby the blade is not twisted along its length. On the other hand and as described above the width of the blade changes between proximal and distal ends whereby each of the leading and trailing edges of the blade describes a non-linear path when viewed in a direction parallel to an axis of rotation of the blade.

Operation of the power generating apparatus will now be described with reference to the Figures. During commissioning of the power generating apparatus 10 the orientation of the water turbine arrangement in particular in respect of yaw is set to provide for optimal performance having regard to the direction of the prevailing water currents. The shape of the blades 18 in accordance with the NACA 00xx profile means that the water turbine arrangement is not self-starting where flow is substantially bidirectional only. The motor 26 is therefore operated to impart torque to the rotor 20 to thereby start the water turbine arrangement. The water turbine arrangement continues to operate under force of water flow such that rotation of the turbine 22 provides for generation of electrical energy which is received in the remote electrical generation hub. When the water flow drops, such as at the end of the tide, the rate of rotation of the turbine 22 slows until the turbine stops. It is to be noted that the symmetric shape in cross section of each blade 18 is such that substantially no lift is generated by blades when the turbine is parked. Following reversal of the direction of water flow, such as upon change of the tide, the motor 26 is operated again to impart torque to the rotor 20 to thereby start the rotor turning in the same direction as previously despite the change in direction of water flow. Under other circumstances, such as where there is yaw error or turbulence, there may be no or at least less need for the above described approach to starting the water turbine arrangement. For example turbulence can give rise to a brief off-axis tide which is sufficient to start the water turbine arrangement or at least reduce the amount of energy required by the motor 26 to start the water turbine arrangement.

## Claims

1. A water turbine arrangement for extracting energy from a flow of water, the water turbine arrangement comprising:
a turbine (22);
at least one blade (18, 30) mounted for rotation and mechanically coupled to the turbine, the at least one blade, in use, rotating in dependence on flow of water to thereby rotate the turbine, each at least one blade being mounted such that the blade pitch is unchangeable,
the water turbine arrangement being configured such that: the at least one blade (18, 30) and the turbine rotate (22) in a same direction irrespective of whether the flow of water is in a first direction or in a second, opposite direction; and the at least one blade is unencircled by part of the water turbine arrangement radially of a distal end of the at least one blade whereby the water turbine arrangement is shroudless, **characterised in that** the water turbine arrangement further comprises a motor (26) which is mechanically coupled to the turbine and which is operative to start rotation of the turbine.

2. The water turbine arrangement according to claim 1 in which each at least one blade (18, 30) is symmetric in cross-section about a plane substantially orthogonal to an axis of rotation of the blade.

3. The water turbine arrangement according to claim 1 or 2 in which each at least one blade (18, 30) is symmetric in cross-section about a plane which extends from a proximal end (32) to a distal end (34) of the blade.

4. The water turbine arrangement according to any one of the preceding claims in which each at least one blade is symmetric (18, 30) in cross-section about a plane which extends from a leading edge (36) of the blade to a trailing edge (38) of the blade.

5. The water turbine arrangement according to any one of the preceding claims in which each at least one blade (18, 30) is asymmetric in cross-section about a plane substantially parallel to an axis of rotation of the blade.

6. The water turbine arrangement according to any one of the preceding claims in which each at least one blade (18, 30) is asymmetric in cross-section about a plane which extends from a proximal end (32) to a distal end (34) of the blade.

7. The water turbine arrangement according to any one of the preceding claims in which each at least one blade tapers towards each of a leading edge (36) and a trailing edge (38) of the blade.

8. The water turbine arrangement of any one of the preceding claims in which a leading edge (36) of each at least one blade is rounded and a trailing edge (38) of the blade is sharp along at least a part of the length of the blade.

9. The water turbine arrangement according to any one of the preceding claims in which a leading edge (36) and a trailing edge (38) of each at least one blade each describes a substantially straight path when viewed along a plane substantially orthogonal to an axis of rotation of the blade.

10. The water turbine arrangement according to any one of the preceding claims in which a width of each at least one blade (18, 30) changes between proximal (32) and distal (34) ends and in which at least one of a leading edge (36) and a trailing edge (38) of the blade describes a non-linear path when viewed in a direction parallel to an axis of rotation of the blade.

11. The water turbine arrangement according to any one of the preceding claims in which a thickness of each at least one blade (18, 30) changes between proximal (32) and distal (34) ends of the blade and in which the blade is thickest towards the proximal end of the blade and becomes progressively thinner towards the distal end of the blade.

12. The water turbine arrangement according to any one of the preceding claims in which the at least one blade (18, 30) has a shape in accordance with a National Advisory Committee for Aeronautics (NACA) 00xx profile.

13. The water turbine arrangement according to any one of the preceding claims in which a cross sectional profile of the at least one blade (18, 30) has a thickness ratio of 12% at a distal end (34) of the blade.

14. The water turbine arrangement according to any one of the preceding claims in which a cross sectional profile of the at least one blade (18, 30) has a thickness ratio of 24% towards the proximal end (32) of the blade at a widest part of the blade before the blade tapers towards the proximal end.

15. Power generating apparatus (10) comprising a water turbine arrangement according to any one of the preceding claims.

## Patentansprüche

1. Wasserturbinenanordnung zum Gewinnen von Energie aus einer Wasserströmung, wobei die Wasserturbinenanordnung umfasst:
Eine Turbine (22);
zumindest eine zur Rotation montierte und mechanisch an die Turbine gekoppelte Schaufel (18, 30), wobei die zumindest eine Schaufel, im Einsatz, in Abhängigkeit von der Wasserströmung rotiert, um dadurch die Turbine zu rotieren, wobei jede zumindest eine Schaufel derartig montiert ist, dass der Schaufelanstellwinkel unveränderlich ist,
wobei die Wasserturbinenanordnung derartig konfiguriert ist, dass: Die zumindest eine Schaufel (18, 30) und die Turbine (22) in der gleichen Richtung rotieren, ungeachtet ob die Wasserströmung in einer ersten Richtung oder in einer zweiten Richtung, entgegengesetzten Richtung, ist; und die zumindest eine Schaufel ist nicht von einem Teil der Wasserturbinenanordnung radial von einem fernen Ende der zumindest einen Schaufel umschlossen, wodurch die Wasserturbinenanordnung ohne Mantel ist, **dadurch gekennzeichnet, dass** die Wasserturbinenanordnung ferner einen Motor (26) umfasst, der mechanisch an die Turbine gekoppelt ist, und welcher betriebsfähig ist, die Rotation der Turbine zu starten.

2. Wasserturbinenanordnung nach Anspruch 1, in welcher jede zumindest eine Schaufel (18, 30) im Querschnitt um eine Ebene im Wesentlichen orthogonal zu einer Rotationsachse der Schaufel symmetrisch ist.

3. Wasserturbinenanordnung nach Anspruch 1 oder 2, in welcher jede zumindest eine Schaufel (18, 30) im Querschnitt um eine Ebene symmetrisch ist, die sich von einem nahen Ende (32) zu einem fernen Ende (34) der Schaufel erstreckt.

4. Wasserturbinenanordnung nach einem der vorhergehenden Ansprüche, in welcher jede zumindest eine Schaufel (18, 30) im Querschnitt um eine Ebene symmetrisch ist, die sich von einer Anströmkante (36) der Schaufel zu einer ablaufenden Kante (38) der Schaufel erstreckt.

5. Wasserturbinenanordnung nach einem der vorhergehenden Ansprüche, in welcher jede zumindest eine Schaufel (18, 30) im Querschnitt um eine Ebene im Wesentlichen parallel zu einer Rotationsachse der Schaufel asymmetrisch ist.

6. Wasserturbinenanordnung nach einem der vorhergehenden Ansprüche, in welcher jede zumindest eine Schaufel (18, 30) im Querschnitt um eine Ebene asymmetrisch ist, die sich von einem nahen Ende (32) zu einem fernen Ende (34) der Schaufel erstreckt.

7. Wasserturbinenanordnung nach einem der vorhergehenden Ansprüche, in welcher sich jede zumindest eine Schaufel in Richtung jeder von einer Anströmkante (36) und einer ablaufenden Kante (38) der Schaufel verjüngt.

8. Wasserturbinenanordnung nach einem der vorhergehenden Ansprüche, in welcher eine Anströmkante (36) jeder zumindest einen Schaufel rundlich ist und eine ablaufende Kante (38) der Schaufel entlang zumindest eines Teils der Länge der Schaufel scharf ist.

9. Wasserturbinenanordnung nach einem der vorhergehenden Ansprüche, in welcher eine Anströmkante (36) und eine ablaufende Kante (38) jeder zumindest einen Schaufel jeweils einen im Wesentlichen geraden Weg, wenn entlang einer Ebene im Wesentlichen orthogonal zu einer Rotationsachse der Schaufel betrachtet, beschreibt.

10. Wasserturbinenanordnung nach einem der vorhergehenden Ansprüche, in welcher sich eine Breite jeder zumindest einen Schaufel (18, 30) zwischen nahen (32) und fernen (34) Enden ändert, und in welcher zumindest eine von einer Anströmkante (36) und einer ablaufenden Kante (38) der Schaufel, wenn in einer Richtung parallel zu einer Rotationsachse der Schaufels betrachtet, einen nicht linearen Weg beschreibt.

11. Wasserturbinenanordnung nach einem der vorhergehenden Ansprüche, in welcher sich eine Dicke jeder zumindest einen Schaufel (18, 30) zwischen nahen (32) und fernen (34) Enden der Schaufel ändert, und in welcher die Schaufel am dicksten in Richtung des nahen Endes der Schaufel ist und in Richtung des fernen Endes der Schaufel fortschreitend dünner wird.

12. Wasserturbinenanordnung nach einem der vorhergehenden Ansprüche, in welcher die zumindest eine Schaufel (18, 30) eine Form in Übereinstimmung mit einem "National Advisory Committee for Aeronautics" (NACA) OOxx Profil.

13. Wasserturbinenanordnung nach einem der vorhergehenden Ansprüche, in welcher ein Querschnittsprofil der zumindest einen Schaufel (18, 30) einen Dickenverhältnis von 12% an einem fernen Ende (34) der Schaufel aufweist.

14. Wasserturbinenanordnung nach einem der vorhergehenden Ansprüche, in welcher ein Querschnittsprofil der zumindest einen Schaufel (18, 30) ein Dickenverhältnis von 24% in Richtung des nahen Endes (32) der Schaufel an einem breitesten Teil der Schaufel aufweist, bevor sich die Schaufel in Richtung des nahen Endes verjüngt.

15. Stromerzeugungsvorrichtung (10), die eine Wasserturbinenanordnung nach einem der vorhergehenden Ansprüche umfasst.

## Revendications

1. Un agencement de turbine hydraulique destiné à l'extraction d'énergie d'un flux d'eau, l'agencement de turbine hydraulique comprenant :
une turbine (22),
au moins une pale (18, 30) montée en rotation et mécaniquement couplée à la turbine, la au moins une pale, en utilisation, tournant en fonction du flux d'eau de façon à ainsi faire tourner la turbine, chaque au moins une pale étant montée de sorte que le pas de pale soit non modifiable,
l'agencement de turbine hydraulique étant configuré de sorte que : la au moins une pale (18, 30) et la turbine tournent (22) dans une même direction, indépendamment du fait que le flux d'eau soit dans une première direction ou dans une deuxième direction opposée, et la au moins une pale est non entourée par une partie de l'agencement de turbine hydraulique radialement d'une extrémité distale de la au moins une pale, grâce à quoi l'agencement de turbine hydraulique est sans nageoire périphérique, **caractérisé en ce que** l'agencement de turbine hydraulique comprend en outre un moteur (26) qui est mécaniquement couplé à la turbine et qui est conçu de façon à démarrer la rotation de la turbine.

2. L'agencement de turbine hydraulique selon la Revendication 1 dans lequel chaque au moins une pale (18, 30) est symétrique en section transversale autour d'un plan sensiblement orthogonal à un axe de rotation de la pale.

3. L'agencement de turbine hydraulique selon la Revendication 1 ou 2 dans lequel chaque au moins une pale (18, 30) est symétrique en section transversale autour d'un plan qui s'étend d'une extrémité proximale (32) à une extrémité distale (34) de la pale.

4. L'agencement de turbine hydraulique selon l'une quelconque des Revendications précédentes dans lequel chaque au moins une pale est symétrique (18, 30) en section transversale autour d'un plan qui s'étend d'un bord d'attaque (36) de la pale à un bord de fuite (38) de la pale.

5. L'agencement de turbine hydraulique selon l'une quelconque des Revendications précédentes dans lequel chaque au moins une pale (18, 30) est asymétrique en section transversale autour d'un plan sensiblement parallèle à un axe de rotation de la pale.

6. L'agencement de turbine hydraulique selon l'une quelconque des Revendications précédentes dans lequel chaque au moins une pale (18, 30) est asymétrique en section transversale autour d'un plan qui s'étend d'une extrémité proximale (32) à une extrémité distale (34) de la pale.

7. L'agencement de turbine hydraulique selon l'une quelconque des Revendications précédentes dans lequel chaque au moins une pale s'amincit vers chaque bord parmi un bord d'attaque (36) et un bord de fuite (38) de la pale.

8. L'agencement de turbine hydraulique selon l'une quelconque des Revendications précédentes dans lequel un bord d'attaque (36) de chaque au moins une pale est arrondi et un bord de fuite (38) de la pale est droit le long d'au moins une partie de la longueur de la pale.

9. L'agencement de turbine hydraulique selon l'une quelconque des Revendications précédentes dans lequel un bord d'attaque (36) et un bord de fuite (38) de chaque au moins une pale décrivent chacun un trajet sensiblement rectiligne lorsqu'il est vu le long d'un plan sensiblement orthogonal à un axe de rotation de la pale.

10. L'agencement de turbine hydraulique selon l'une quelconque des Revendications précédentes dans lequel une largeur de chaque au moins une pale (18, 30) change entre les extrémités proximale (32) et distale (34) et dans lequel au moins un bord parmi un bord d'attaque (36) et un bord de fuite (38) de la pale décrit un trajet non linéaire lorsqu'il est vu dans une direction parallèle à un axe de rotation de la pale.

11. L'agencement de turbine hydraulique selon l'une quelconque des Revendications précédentes dans lequel une épaisseur de chaque au moins une pale (18, 30) change entre les extrémités proximale (32) et distale (34) de la pale et dans lequel la pale est la plus épaisse vers l'extrémité proximale de la pale et devient progressivement plus mince vers l'extrémité distale de la pale.

12. L'agencement de turbine hydraulique selon l'une quelconque des Revendications précédentes dans lequel la au moins une pale (18, 30) possède une forme conforme à un profil 00xx du NACA (National Advisory Committee for Aeronautics).

13. L'agencement de turbine hydraulique selon l'une quelconque des Revendications précédentes dans lequel un profil en section transversale de la au moins une pale (18, 30) possède une épaisseur relative de 12% au niveau d'une extrémité distale (34) de la pale.

14. L'agencement de turbine hydraulique selon l'une quelconque des Revendications précédentes dans lequel un profil en section transversale de la au moins une pale (18, 30) possède une épaisseur relative de 24% vers l'extrémité proximale (32) de la pale au niveau d'une partie la plus large de la pale avant que la pale ne s'amincisse vers l'extrémité proximale.

15. Un appareil de génération d'électricité (10) comprenant un agencement de turbine hydraulique selon l'une quelconque des Revendications précédentes.
